# EUROPÄISCHE PATENTSCHRIFT

(11) **EP 1 123 337 B1**
(45) Veröffentlichungstag und Bekanntmachung des Hinweises auf die Patenterteilung: **26.09.2007**
(21) Anmeldenummer: 99946083.5
(22) Anmeldetag: 01.09.1999
(51) Int. Cl.: C08G 61/02

(54) **KONJUGIERTE POLYMERE ENTHALTEND 2,7-FLUORENYLEINHEITEN MIT VERBESSERTEN EIGENSCHAFTEN**
CONJUGATED POLYMERS CONTAINING 2,7 FLUORENYL UNITS WITH IMPROVED PROPERTIES
POLYMERES CONJUGUES CONTENANT DES UNITES 2,7-FLUORENYLE A PROPRIETES AMELIOREES

(30) Priorität: 10.10.1998 DE 19846768
(43) Veröffentlichungstag der Anmeldung: 16.08.2001
(73) Patentinhaber: Merck Patent GmbH, 64293 Darmstadt (DE)
(72) Erfinder: SPREITZER, Hubert, D-65929 Frankfurt am Main (DE); BECKER, Heinrich, D-61479 Glashütten (DE); KREUDER, Willi, D-55126 Mainz (DE)
(74) Vertreter: Benz, Jürgen
(86) Internationale Anmeldenummer: PCT/EP1999/006422
(87) Internationale Veröffentlichungsnummer: WO 2000/022027

(56) Entgegenhaltungen:
- WO-A-97/05184
- GB-A- 2 313 127
- US-A- 5 777 070
- KREYENSCHMIDT M ET AL: "THERMALLY STABLE BLUE-LIGHT-EMITTING COPOLYMERS OF POLY(ALKYLFLUORENE)" MACROMOLECULES,US,AMERICAN CHEMICAL SOCIETY. EASTON, Bd. 31, Nr. 4, Seite 1099-1103 XP000732910 ISSN: 0024-9297

## Beschreibung

Es besteht ein hoher industrieller Bedarf an großflächigen Festkörper-Lichtquellen für eine Reihe von Anwendungen, überwiegend im Bereich von Anzeigeelementen, der Bildschirmtechnologie und der Beleuchtungstechnik. Die an diese Lichtquellen gestellten Anforderungen können zur Zeit von keiner der bestehenden Technologien völlig befriedigend gelöst werden.

Als Alternative zu herkömmlichen Anzeige- und Beleuchtungselementen, wie Glühlampen, Gasentladungslampen und nicht selbstleuchtenden Flüssigkristallanzeigeelementen, sind bereits seit einiger Zeit Elektrolumineszenz(EL)materialien und -vorrichtungen, wie lichtemittierende Dioden (LED), in Gebrauch.

Neben anorganischen sind seit etwa 30 Jahren auch niedermolekulare organische Elektrolumineszenzmaterialien und -vorrichtungen bekannt (siehe z.B. US-A-3,172,862). Bis vor kurzem waren aber solche Vorrichtungen in ihrer praktischen Verwendbarkeit stark eingeschränkt.

In WO 90/13148 und EP-A-0,443,861 sind Elektrolumineszenzvorrichtungen beschrieben, die einen Film aus einem konjugierten Polymer als lichtemittierende Schicht (Halbleiterschicht) enthalten. Solche Vorrichtungen bieten zahlreiche Vorteile wie die Möglichkeit, großflächige, flexible Displays einfach und kostengünstig herzustellen. Im Gegensatz zu Flüssigkristalldisplays sind Elektrolumineszenz-Displays selbstleuchtend und benötigen daher keine zusätzliche rückwärtige Beleuchtungsquelle.

Eine typische Vorrichtung nach WO 90/13148 besteht aus einer lichtemittierenden Schicht in Form eines dünnen, dichten Polymerfilmes (Halbleiterschicht), der wenigstens ein konjugiertes Polymer enthält. Eine erste Kontaktschicht steht in Kontakt mit einer ersten Oberfläche, eine zweite Kontaktschicht mit einer weiteren Oberfläche der Halbleiterschicht. Der Polymerfilm der Halbleiterschicht hat eine genügend geringe Konzentration von extrinsischen Ladungsträgern, so daß beim Anlegen eines elektrischen Feldes zwischen den beiden Kontaktschichten Ladungsträger in die Halbleiterschicht eingebracht werden, wobei die eine Kontaktschicht positiv gegenüber der anderen wird, und die Halbleiterschicht Strahlung aussendet. Die in solchen Vorrichtungen verwendeten Polymere sind konjugiert. Unter konjugiertem Polymer versteht man ein Polymer, das ein delokalisiertes Elektronensystem entlang der Hauptkette besitzt. Das delokalisierte Elektronensystem verleiht dem Polymer Halbleitereigenschaften und gibt ihm die Möglichkeit, positive und/oder negative Ladungsträger mit hoher Mobilität zu transportieren.

Für die Verwendung in EL-Elementen gemäß WO 90/13148 sind bereits sehr viele verschiedene Polymere vorgeschlagen worden. Besonders gut geeignet scheinen dabei Derivate des Poly(p-phenylen-vinylens) PPV zu sein. Derartige Polymere sind beispielsweise in WO 98/27136 beschrieben. Diese Polymere sind insbesondere für Elektrolumineszenz im grünen bis roten Spektralbereich geeignet. Im blauen bis blaugrünen Spektralbereich sind bisher hauptsächlich Polymere auf Basis des Polyp-phenylens (PPP) bzw. Polyfluorens (PF) vorgeschlagen worden. Entsprechende Polymere sind beispielsweise in EP-A-0,707,020, WO 97/05184 und WO 97/33323 beschrieben. Diese Polymere zeigen bereits gute EL-Eigenschaften, wobei die Entwicklung noch lange nicht abgeschlossen ist. So weisen Polymere im blauen bis blaugrünen Spektralbereich häufig noch das Phänomen der morphologischen Instabiltät auf. Z. B. zeigen viele Polyfluorene flüssigkristallines oder verwandtes Verhalten, welches im dünnen Film zu Domänenbildung führen kann, was wiederum zur Herstellung einer homogen leuchtenden Fläche ungeeignet ist. Auch neigen diese Polymere zur Aggregatbildung, was die Elektrolumineszenz ungewünscht in den langwelligen Bereich verschiebt, sowie die Lebensdauer der EL-Elemente negativ beeinflußt.

Aufgabe der vorliegenden Erfindung war es daher, Polymere bereitzustellen, die im blauen und blaugrünen Spektralbereich zur Emission geeignet sind und die gleichzeitig verbessertes morphologisches Verhalten aufweisen.

Überraschend wurde nun gefunden, daß durch den Einbau von speziellen Comonomeren in ansonsten typisch lineare konjugierte Polymere, die hauptsächlich 2,7-Fluorenyleinheiten enthalten, die morphologischen Eigenschaften signifikant verbessert werden, ohne die sehr guten Anwendungseigenschaften (Emissionsfarbe, Quantenausbeute der Emission, Verwendbarkeit in EL-Applikationen) zu verlieren. Ein ähnlicher Ansatz ist in M. Kreyenschmidt et al., Macromolecules 1998, 31, 1099 beschrieben. Hier wurde versucht, die morphologische Stabilität von Polyfluorenen durch Einbau von Comonomeren zu erhöhen. Gute Ergebnisse (die Morphologie betreffend) wurden hier jedoch nur für Comonomere, die zu einer Konjugationsunterbrechung führen, erhalten. Diese Unterbrechungen führen jedoch zu generellen Problemen (z. B. niedrigere Ladungsträgermobilität) bei der Verwendung derartiger Polymere in elektronischen Anwendungen, z. B. EL-Vorrichtungen.

Die erfindungsgemäßen Polymere enthalten statistisch oder regelmäßig einpolymerisierte Comonomer-Einheiten, die einerseits eine elektronische Konjugation des gesamten Polymeren erlauben und andererseits dem Polymer in seiner Polymerhauptkette einen Knick aufzwingen.
Als Knick entlang der Polymerhauptkette im Sinne der vorliegenden Anmeldung ist folgendes zu verstehen: Betrachtet man das Polymer, welches hauptsächlich 2,7-Fluorenyleinheiten enthält, als linearen Stab, bewirkt der Knick eine deutliche Abweichung vom linearen Verlauf, d. h. betrachtet man die Längsachse der 2,7-Fluorenyleinheiten als Gerade, so weisen diese von zwei an den Knick anschließenden Einheiten im Schnittpunkt einen Winkel auf, der deutlich von 180 (bzw. 0°) abweicht; hierbei wird die formale Konjugation des Polymeren jedoch nicht unterbrochen.

Gegenstand der Erfindung sind konjugierte Polymere, die neben Struktureinheiten der Formel (1), 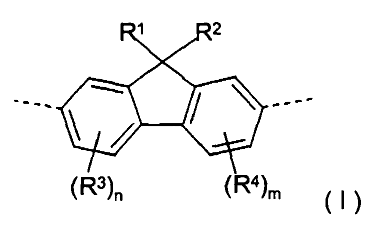 worin
- R¹, R²: gleich oder verschieden Wasserstoff, C₁-C₂₂-Alkyl, C₂-C₂₀-Hetereoaryl, C₅-C₂₀-Aryl, F, Cl, CN; wobei die vorstehend genannten Alkylreste verzweigt oder unverzweigt sein können oder auch Cycloalkyle darstellen, und einzelne, nicht benachbarte CH₂-Gruppen des Alkyrestes durch O, S, C=O, COO, N-R⁵ oder auch einfache Aryle ersetzt sein können, wobei die vorstehend genannten Aryle mit einem oder mehreren Substituenten R³ substituiert sein können. Bevorzugt sind Verbindungen, bei denen R¹ und R² beide gleich und dabei ungleich Wasserstoff oder Chlor sind. Weiterhin bevorzugt sind Verbindungen, bei denen R¹ und R² voneinander verschieden und auch von Wasserstoff verschieden sind;
- R³, R⁴: gleich oder verschieden C₁-C₂₂-Alkyl, C₂-C₂₀-Hetereoaryl, C₅-C₂₀-Aryl, F, Cl, CN, SO₃R⁵, NR⁵R⁶; dabei können die Alkylreste verzweigt oder unverzweigt sein oder auch Cycloalkyle darstellen; und einzelne, nicht benachbarte CH₂-Gruppen des Alkylrestes durch O, S, C=O, COO, N-R⁵ oder auch einfache Aryle ersetzt sein können, wobei die vorstehend genannten Aryle mit einem oder mehreren nichtaromatischen Substituenten R³ substituiert sein können,
- R⁵, R⁶: gleich oder verschieden H, C₁-C₂₂-Alkyl, C₂-C₂₀-Hetereoaryl, C₅-C₂₀-Aryl; dabei können die Alkylreste verzweigt oder unverzweigt sein oder auch Cycloalkyle darstellen; und einzelne, nicht benachbarte CH₂-Gruppen des Alkylrestes durch O, S, C=O, COO, N-R⁵ oder auch einfache Aryle ersetzt sein, wobei die vorstehend genannten Aryle mit einem oder mehreren nichtaromatischen Substituenten R³ substituiert sein können, und
- m, n: jeweils eine ganze Zahl 0, 1, 2 oder 3, bevorzugt 0 oder 1 ist, noch Struktureinheiten der Formel (II) 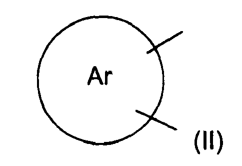
worin
- Ar: für Benzolderivate, die in 1,2-Stellung ins Polymer eingebaut sind, Naphthalinderivate, die in 1,2-, 2,3-, 1,7-Stellung ins Polymer eingebaut sind, Anthracenderivate, die in 1,2-, 2,3-, 1,7-, 2,9-Stellung ins Polymer eingebaut sind, Phenanthrenderivate, die in 1,2- , 1,8-, 1,9-, 2,3-, 2,5-, 2,10-, 3,4-, 3,6-, 3,9-, 4,5- oder 9,10-Stellung ins Polymer eingebaut sind, Biphenylderivate, die in 2,2'- bzw. 2,4'- Stellung ins Polymer eingebaut sind, und/oder o-Terphenylderivate, die in 4,4"-Stellung ins Polymer eingebaut sind, steht, bei denen ein oder mehrere Kohlenstoffatome durch Stickstoff, Sauerstoff oder Schwefel ersetzt sein können, und dessen Verknüpfungsstellen so gewählt sind, daß sich entlang der Polymerhauptkette ein Winkel ungleich 180°, vorzugsweise kleiner 120°, insbesondere bevorzugt kleiner 90° ergibt, ist, enthalten.

Besonders geeignet sind Reste Ar (Aromat) die neben dem eingangs erwähnten Knick noch eine räumliche Verdrillung der Polymerhauptkette bewirken. Dies ist dann erreicht, wenn die drei Polymerteilstränge, die durch zwei aufeinanderfolgende Knicke verbunden sind, nicht mehr in eine Ebene zu bringen sind (d. h. ein Diederwinkel von deutlich größer 0° resultiert).

Das erfindungsgemäße Polymer enthält mindestens 1 Mol-%, vorzugsweise 2 Mol-% bis 50 Mol-%, an Struktureinheiten (eine oder mehrere verschiedene) der Formel (II) statistisch, alternierend, periodisch, oder in Blöcken eingebaut.

Bevorzugt werden für Struktureinheiten der Formel (II) solche aromatische oder heteroaromatische Strukturen gewählt, bei denen die kürzeste Verbindung zwischen den Verknüpfungsstellen über eine gerade Zahl (oder 0) von miteinander verbundenen Atomen führt.

Die erfindungsgemäßen Polymere sind vorzugsweise Copolymere bestehend aus den Struktureinheiten der Formeln (I) und (II). In einer weiteren Ausführungsform der vorliegenden Erfindung kann das erfindungsgemäße Polymer auch verschiedene Struktureinheiten der Formel (I) und/oder (II) enthalten. Weiterhin sind auch bevorzugt Copolymere, die noch andere, nicht unter die Struktureinheiten (I) oder (II) fallende Strukturen enthalten. Beispiele für derartige weitere Monomere sind 1,4-Phenylene und 4,4'-Biphenyle, die gegebenenfalls auch Substituenten tragen können, bevorzugt dabei verzweigte oder unverzweigte C₁-C₂₂-Alkyl- oder Alkoxygruppen.

Die erfindungsgemäßen Polymere weisen im allgemeinen 10 bis 10000, vorzugsweise 10 bis 5000, besonders bevorzugt 50 bis 5000, ganz besonders bevorzugt 50 bis 1000 Wiederholeinheiten auf.

Besonders bevorzugt sind Polymere bei denen m, n gleich null sind. R¹, R² sind beide gleich den oben definierten Alkylsubstituenten bzw. sind beide gleich den oben definierten Arylsubstituenten, bzw. R¹ entspricht einem Alkyl- und R² entspricht einem Arylsubstituenten.

Bevorzugt leiten sich die Struktureinheiten der Formel (II) von 1,2-Phenylen, 2,2'-Biphenylen oder 4,4"-o-Terphenylen ab.

Die erfindungsgemäßen Polymere lassen sich durch die unterschiedlichsten Reaktionen aufbauen. Bevorzugt sind jedoch einheitliche C-C-Kupplungsreaktion, z. B. Suzuki-Kondensation und Stille-Kondensation. Einheitliche C-C-Kupplungsreaktion soll in diesem Zusammenhang bedeuten, daß aus der Stellung der reaktiven Gruppen in den entsprechenden Monomeren die Verknüpfung in den Polymeren festgelegt ist. Dies ist besonders gut durch die o. g. Reaktionen, die sich wegen des sauberen Ablaufs sehr gut eignen, gegeben. Geeignet ist weiterhin die Nickel- oder Palladium-katalysierte Kupplung von Halogenaromaten (Yamamoto-Kupplung). Weniger gut sind hingegen oxidative Verfahren (z. B. Oxidative Kupplung mit Fe(III)-Salzen) geeignet, da diese zu weniger gut definierten Verknüpfungen führen.
Aus oben gesagtem resultiert auch die bevorzugte Wahl der Monomere: diese stellen die entsprechenden Bishalogen-, Bispseudohalogen- (d. h. im Sinne dieser Erfindung z. B. Bis-Triflat, Bis-Nonaflat, Bis-Tosylat), Bisboronsäure-, Bisstannat-, Monohalogen-monoboronsäure-, Monohalogen-monostannatderivate der Verbindungen gemäß Formel (I) und Formel (II) dar.

Die Synthese der erfindungsgemäßen Polymere ist beispielhaft durch das nachfolgende Schema 1 wiedergegeben:

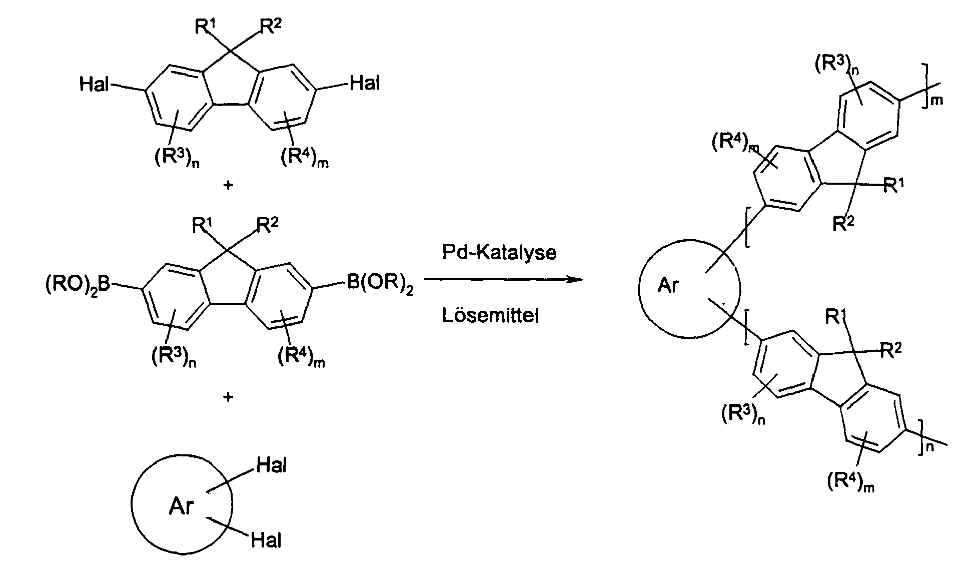

In Schema 1 ist die Polymerisation via Suzuki-Kupplung angegeben. Es sei ausdrücklich darauf verwiesen, daß es sich hierbei nur um eine mögliche Ausführungsform handelt. Es sind natürlich auch andere Kombinationen von Boronsäurederivaten und Halogenen/Pseudohalogenen ausführbar. Analog ist mit entsprechenden Zinnverbindungen auch die Polymerisation nach Stille durchzuführen.
Die Polymerisation gemäß Suzuki ist wie folgt vorzunehmen:
Die den Struktureinheiten der Formel(I) und (II) zugrundeliegenden Monomere (und gegebenenfalls weitere zusätzliche Monomere mit entsprechenden aktiven Abgangsgruppen) werden in einem inerten Lösungsmittel bei einer Temperatur im Bereich von 0°C bis 200°C in Gegenwart eines Palladium enthaltenden Katalysators zur Reaktion gebracht.
Dabei ist darauf zu achten, daß die Gesamtheit aller verwendeten Monomere ein möglichst ausgeglichenes Verhältnis an Boronsäurefunktionen zu Halogen- bzw. Pseudohalogenfunktionen aufweist. Es kann sich zudem als vorteilhaft erweisen, am Ende der Reaktion durch Endcapping mit monofunktionellen Reagenzien eventuell überschüssige reaktive Gruppen zu entfernen.

Zur Durchführung der angegebenen Reaktion mit Boronsäure(ester)n werden die aromatischen Borverbindungen, die aromatischen Halogenverbindungen, eine Base und katalytische Mengen des Palladiumkatalysators in Wasser oder in ein oder mehrere inerte organische Lösungsmittel oder vorzugsweise in eine Mischung aus Wasser und einem oder mehreren inerten organischen Lösungsmitteln gegeben und bei einer Temperatur von 0 bis 200°C, bevorzugt bei 30 bis 170°C, besonders bevorzugt bei 50 bis 150°C, insbesonders bevorzugt bei 60 bis 120°C für einen Zeitraum von 1 h bis 200 h, bevorzugt 5 h bis 150 h, besonders bevorzugt 24 h bis 120 h, gerührt. Es kann sich dabei auch als vorteilhaft erweisen, eine Art von Monomer (z. B. ein Bisboronsäurederivat) kontinuierlich oder diskontinuierlich über einen längeren Zeitraum langsam zuzudosieren, um damit das Molekulargewicht zu regeln. Das Rohprodukt kann nach dem Fachmann bekannten und dem jeweiligen Polymer angemessenen Methoden, z.B. mehrfaches Umfällen bzw. auch durch Dialyse gereinigt werden.
Für das beschriebene Verfahren geeignete organische Lösungsmittel sind beispielsweise Ether, z. B. Diethylether, Dimethoxyethan, Diethylenglykoldimethylether, Tetrahydrofuran, Dioxan, Dioxolan, Diisopropylether, tert.-Butylmethylether, Kohlenwasserstoffe, z. B. Hexan, iso-Hexan, Heptan, Cyclohexan, Toluol, Xylol, Alkohole, z. B. Methanol, Ethanol, 1-Propanol, 2-Propanol, Ethylenglykol, 1-Butanol, 2-Butanol, tert.-Butanol, Ketone, z. B. Aceton, Ethylmethylketon, iso-Butylmethylketon, Amide, z.B. Dimethylformamid, Dimethylacetamid, N-Methylpyrrolidon, Nitrile, z.B. Acetonitril, Propionitril, Butyronitril, und Mischungen derselben.

Bevorzugte organische Lösungsmittel sind Ether, wie Dimethoxyethan, Diethylenglykoldimethylether, Tetrahydrofuran, Dioxan, Diisopropylether, t-Butylmethylether, Kohlenwasserstoffe, wie Hexan, Heptan, Cyclohexan, Toluol, Xylol, Alkohole, wie Methanol, Ethanol, 1-Propanol, 2-Propanol, 1-Butanol, 2-Butanol, tert.-Butanol, Ethylenglykol, Ketone, wie Ethylmethylketon, iso-Butylmethylketon, Amide, wie Dimethylformamid, Dimethylacetamid, N-Methylpyrrolidon und Mischungen derselben.

Besonders bevorzugte Lösungsmittel sind Ether, z. B. Dimethoxyethan, Tetrahydrofuran, Kohlenwasserstoffe, z. B. Cyclohexan, Toluol, Xylol, Alkohole, z. B. Ethanol, 1-Propanol, 2-Propanol, 1-Butanol, tert.-Butanol und Mischungen derselben.

In einer besonders bevorzugten Variante werden bei dem beschriebenen Verfahren Wasser und ein oder mehrere Lösungsmittel eingesetzt.
Beispiele sind Mischungen aus Wasser und Toluol, Wasser, Toluol und Tetrahydrofuran sowie Wasser, Toluol und Ethanol.

Basen, die bei dem beschriebenen Verfahren vorzugsweise Verwendung finden sind Alkali- und Erdalkalimetallhydroxide, Alkali- und Erdalkalimetallcarbonate, Alkalimetallhydrogencarbonate, Alkali- und Erdalkalimetallacetate, Alkali- und
Erdalkalimetallalkoholate, sowie primäre, sekundäre und tertiäre Amine.
Besonders bevorzugt sind Alkali- und Erdalkalimetallhydroxide, Alkali- und Erdalkalimetallcarbonate und Alkalimetallhydrogencarbonate.

Insbesondere bevorzugt sind Alkalimetallhydroxide, wie Natriumhydroxid und Kaliumhydroxid, sowie Alkalimetallcarbonate und Alkalimetallhydrogencarbonate, wie Lithiumcarbonat, Natriumcarbonat und Kaliumcarbonat.

Die Base wird bei dem angegebenen Verfahren bevorzugt mit einem Anteil von 100 bis 1000 Mol-%, besonders bevorzugt 100 bis 500 Mol-%, ganz besonders bevorzugt 150 bis 400 Mol-%, insbesondere 180 bis 250 Mol-%, bezogen auf Borgruppen, eingesetzt.

Der Palladiumkatalysator enthält Palladiummetall oder eine Palladium (0) oder (II) Verbindung und einen Komplexliganden, vorzugsweise einen Phosphanliganden. Die beiden Komponenten können eine Verbindung bilden, z.B. das besonders bevorzugte Pd(PPh₃)₄, oder getrennt eingesetzt werden.

Als Palladiumkomponente eignen sich beispielsweise Palladiumverbindungen, wie Palladiumketonate, Palladiumacetylacetonate, Nitrilpalladiumhalogenide, Olefinpalladiumhalogenide, Palladiumhalogenide, Allylpalladiumhalogenide und Palladiumbiscarboxylate, bevorzugt Palladiumketonate, Palladiumacetylacetonate, bis-η²-Olefinpalladiumdihalogenide, Palladium(II)halogenide, η³-Allylpalladiumhalogenid Dimere und Palladiumbiscarboxylate, ganz besonders bevorzugt Bis(dibenzylidenaceton)palladium(0) [Pd(dba)₂)], Pd(dba)₂ CHCl₃, Palladiumbisacetylacetonat, Bis(benzonitril)palladiumdichlorid, PdCl₂, Na₂PdCl₄, Dichlorobis(dimethylsulfoxid)palladium(II), Bis(acetonitril)palladiumdichlorid, Palladium-II-acetat, Palladium-II-propionat, Palladium-II-butanoat und (1c,5c-Cyclooctadien)palladiumdichlorid.

Ebenso als Katalysator dienen kann Palladium in metallischer Form, im folgenden nur Palladium genannt, vorzugsweise Palladium in kolloidaler oder pulverisierter Form oder auf einem Trägermaterial, z.B. Palladium auf Aktivkohle, Palladium auf Aluminiumoxid, Palladium auf Bariumcarbonat, Palladium auf Bariumsulfat, Palladium auf Aluminiumsilikaten, wie Montmorillonit, Palladium auf SiO₂ und Palladium auf Calciumcarbonat, jeweils mit einem Palladiumgehalt von 0,5 bis 10 Gew.-%. Besonders bevorzugt sind Palladium in pulverisierter Form, Palladium auf Aktivkohle, Palladium auf Barium- und/oder Calciumcarbonat und Palladium auf Bariumsulfat, jeweils mit einem Palladiumgehalt von 0,5 bis 10 Gew.-% insbesondere bevorzugt ist Palladium auf Aktivkohle mit einem Palladiumgehalt von 5 oder 10 Gew.-%
Der Palladiumkatalysator wird bei dem erfindungsgemäßen Verfahren mit einem Anteil von 0,01 bis 10 Mol-%, bevorzugt 0,05 bis 5 Mol-%, besonders bevorzugt 0,1 bis 3 Mol-%, insbesondere bevorzugt 0,1 bis 1,5 Mol-%, bezogen auf die Halogengruppen, eingesetzt.

Für das Verfahren geeignete Liganden sind beispielsweise Phosphane, wie Trialkylphosphane, Tricycloalkylphosphane, Triarylphosphane, wobei die drei Substituenten am Phosphor gleich oder verschieden, chiral oder achiral sein können und wobei einer oder mehrere der Liganden die Phosphorgruppen mehrerer Phosphane verknüpfen können und wobei ein Teil dieser Verknüpfung auch ein oder mehrere Metallatome sein können.
Beispiele für im Rahmen des hier beschriebenen Verfahrens verwendbare Phosphane sind Trimethylphosphan, Tributylphosphan, Tricyclohexylphosphan, Triphenylphosphan, Tritolylphosphan, Tris-(4-dimethylaminophenyl)phosphan, Bis(diphenylphosphano)methan, 1,2-Bis(diphenylphosphano)ethan, 1,3-Bis(diphenylphosphano)propan und 1,1'-Bis(diphenylphosphano)ferrocen.
Weitere geeignete Liganden sind beispielsweise Diketone, z. B. Acetylaceton und Octafluoracetylaceton und tert. Amine, z. B. Trimethylamin, Triethylamin, Tri-n-propylamin und Triisopropylamin.
Bevorzugte Liganden sind Phosphane und Diketone, besonders bevorzugt sind Phosphane.
Ganz besonders bevorzugte Liganden sind Triphenylphosphan, 1,2-Bis(diphenylphosphano)ethan, 1,3-Bis(diphenylphosphano)propan und 1,1'-Bis(diphenylphosphano)ferrocen, insbesondere Triphenylphosphan.
Für das Verfahren weiterhin geeignet sind wasserlösliche Liganden, die beispielsweise Sulfonsäuresalz- und/oder Sulfonsäurereste und/oder Carbonsäuresalz- und/oder Carbonsäurereste und/oder Phosphonsäuresalz und/oder Phosphonsäurereste und/oder Phosphoniumgruppen und/oder Peralkylammoniumgruppen und/oder Hydroxygruppen und/oder Polyethergruppen mit geeigneter Kettenlänge enthalten.

Bevorzugte Klassen von wasserlöslichen Liganden sind mit den obigen Gruppen substituierte Phosphane, wie Trialkylphosphane, Tricycloalkylphosphane, Triarylphosphane, Dialkylarylphosphane, Alkyldiarylphosphane und Heteroarylphosphane wie Tripyridylphosphan und Trifurylphosphan, wobei die drei Substituenten am Phosphor gleich oder verschieden, chiral oder achiral sein können und wobei einer oder mehrere der Liganden die Phosphorgruppen mehrerer Phosphane verknüpfen können und wobei ein Teil dieser Verknüpfung auch ein oder mehrere Metallatome sein können, Phosphite, Phosphinigsäureester und Phosphonigsäureester, Phosphole, Dibenzophosphole und Phosphoratome enthaltende cyclische bzw. oligo- und polycyclische Verbindungen.

Der Ligand wird bei dem Verfahren mit einem Anteil von 0,1 bis 20 Mol %, bevorzugt 0,2 bis 15 Mol %, besonders bevorzugt 0,5 bis 10 Mol %, insbesonders bevorzugt 1 bis 6 Mol %, bezogen auf die aromatischen Halogengruppen, eingesetzt. Es können gegebenenfalls auch Mischungen zweier oder mehrerer verschiedener Liganden eingesetzt werden.

Vorteilhafte Ausführungsformen des beschriebenen Verfahrens der Suzuki-Variante sind für niedermolekulare Kupplungen z.B. in WO 94/101 05, EP-A-679 619, WO-A-694 530 und PCT/EP 96/03154 beschrieben, auf die hiermit ausdrücklich Bezug genommen wird. Sie gelten durch Zitat als Bestandteil der Beschreibung dieser Anmeldung.

### Die Polymerisation gemäß Stille ist wie folgt vorzunehmen:

Die den Struktureinheiten der Formel (I) und (II) zugrundeliegenden Monomeren (und gegebenenfalls weitere andere Monomere mit entsprechenden aktiven Abgangsgruppen) werden in einem inerten Lösungsmittel bei einer Temperatur im Bereich von 0°C bis 200°C in Gegenwart eines Palladiumkatalysators zur Reaktion gebracht. Dabei ist darauf zu achten, daß die Gesamtheit aller verwendeten Monomere ein möglichst ausgeglichenes Verhältnis an Zinnorganylfunktionen zu Halogen- bzw. Pseudohalogenfunktionen aufweist, um hohe Polymerisationsgrade zu erzielen. Es kann sich zudem als vorteilhaft erweisen, am Ende der Reaktion durch Endcapping mit monofunktionellen Reagenzien eventuell überschüssige reaktive Gruppen zu entfernen.

Ein Überblick über diese Reaktion findet sich z.B. bei J.K. Stille, Angew. Chemie Int. Ed. Engl. 1986, 25, 508.

Zur Durchführung des Verfahrens werden bevorzugt aromatische Zinnverbindungen, aromatische Halogenverbindungen, in ein oder mehrere inerte organische Lösungsmittel gegeben und bei einer Temperatur von 0°C bis 200°C, bevorzugt bei 30°C bis 170°C, besonders bevorzugt bei 50°C bis 150°C, insbesondere bevorzugt bei 60°C bis 120°C für einen Zeitraum von 1 h bis 200 h, bevorzugt 5 h bis 150 h, besonders bevorzugt 24 h bis 120 h, gerührt. Es kann sich dabei auch als vorteilhaft erweisen, eine Art von Monomer (z. B. ein Bisstannylderivat) kontinuierlich oder diskontinuierlich über einen längeren Zeitraum langsam zuzudosieren, um damit das Molekulargewicht zu regeln. Das Rohprodukt kann nach dem Fachmann bekannten und dem jeweiligen Polymer angemessenen Methoden, z.B. mehrfaches Umfällen bzw. auch durch Dialyse gereinigt werden.

Für das beschriebene Verfahren geeignete organische Lösungsmittel sind beispielsweise Ether, z.B. Diethylether, Dimethoxyethan, Diethylenglykoldimethylether, Tetrahydrofuran, Dioxan, Dioxolan, Diisopropylether, tert.-Butylmethylether, Kohlenwasserstoff, z.B. Hexan, iso-Hexan, Heptan, Cyclohexan, Benzol, Toluol, Xylol, Alkohole, z.B. Methanol, Ethanol, 1-Propanol, 2-Propanol, Ethylenglykol, 1-Butanol, 2-Butanol, tert.-Butanol, Ketone, z.B. Aceton, Ethylmethylketon, iso-Butylmethylketon, Amide, z.B. Dimethylformamid (DMF), Dimethylacetamid, N-Methylpyrrolidon, Nitrile, z.B. Acetonitril, Propionitril, Butyronitril und Mischungen derselben.

Bevorzugte organische Lösungsmittel sind Ether, wie Dimethoxyethan, Diethylenglykoldimethylether, Tetrahydrofuran, Dioxan, Diisopropylether, Kohlenwasserstoffe, wie Hexan, Heptan, Cyclohexan, Benzol, Toluol, Xylol, Alkohole, wie Methanol, Ethanol, 1-Propanol, 2-Propanol, 1-Butanol, 2-Butanol, tert.-Butanol, Ethylenglykol, Ketone, wie Ethylmethylketon, oder Amide, wie DMF.

Besonders bevorzugte Lösungsmittel sind Amide, ganz besonders bevorzugt ist DMF.

Die Palladium- und die Phosphinkomponente sind analog zu der Beschreibung für die Suzuki-Variante zu wählen.

Beispielhafte Monomere sind im nachfolgenden Schema 2 aufgeführt:

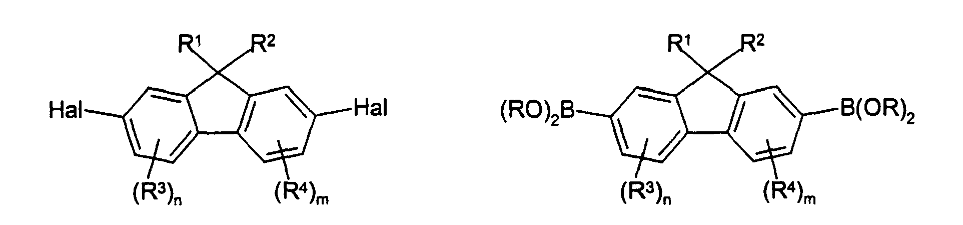

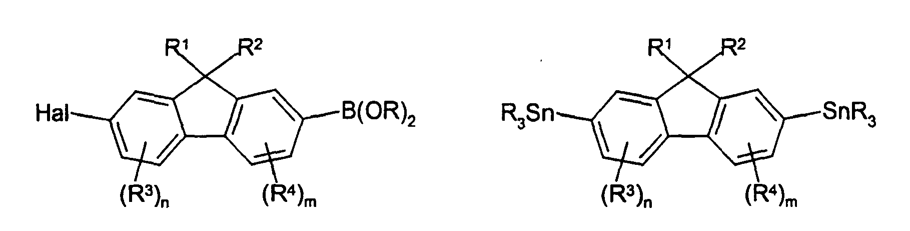

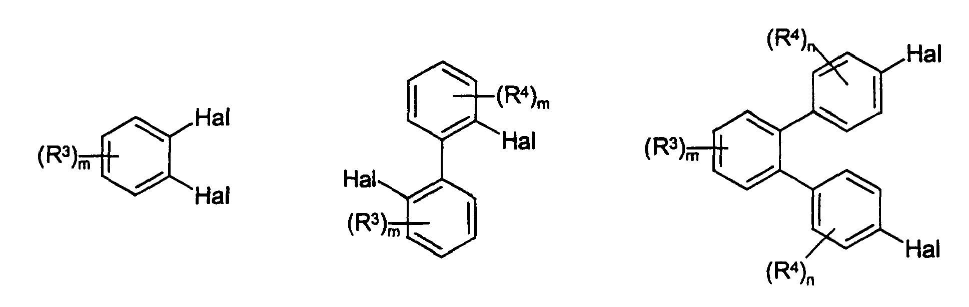

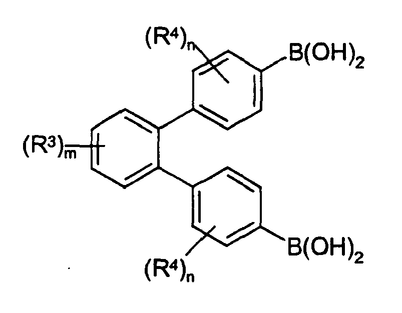

Die geeigneten Monomere sind beispielhaft wie im folgenden Schema 3 beschrieben zu synthetisieren:

### A) 9,9-Dialkylfluorenmonomere:

Derartige Monomere sind beispielsweise gemäß dem folgenden Schema 3 zu synthetisieren: 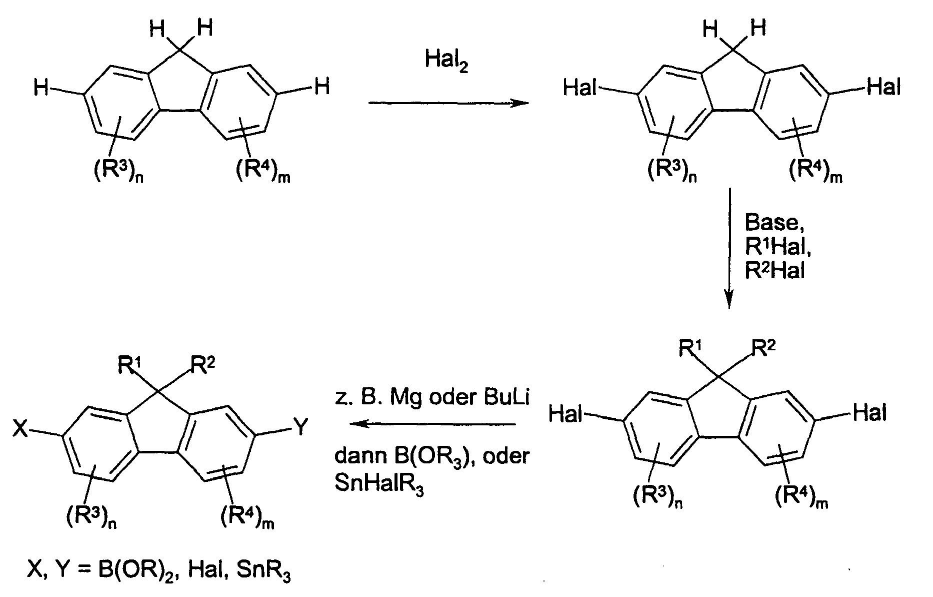 Demzufolge sind einfache Fluorenderivate zu halogenieren. Für m, n = 0 entspricht dies der Halogenierung von Fluoren. 2,7-Dibromfluoren ist kommerziell erhältlich (z. B. Aldrich). Anschließend ist es möglich, zwei gleiche oder auch zwei verschiedene Alkylketten an der 9-Position durch zunächst Deprotonierung und folgender nucleophiler Substitution mit geeigneten Alkylhalogeniden einzuführen. Dies kann beispielsweise gemäß den Beschreibungen in WO 97/05184 und WO 97/33323 geschehen.
Die dadurch erhaltenen Verbindungen (Bishalogenfluorenderivate) sind bereits als Monomere verwendbar. Durch eine weitere Umsetzung (Metallierung mit anschließender Reaktion entweder mit Borsäureester oder Trialkylzinnhalogenid) sind weitere Monomere zu gewinnen: Fluorenbisboronsäurederivate, Fluorenbisstannate bzw. bei entsprechender Stöchiometrie auch Monohalogenfluorenmonoboronsäurederivate bzw. Monohalogenfluorenmonostannate. Diese letztgenannten Umsetzungen können nach Standardverfahren durchgeführt werden, wie sie beispielsweise in WO 98/27136 beschrieben sind.

### B) 9-Alkyl-9-arylfluorenmonomere:

Derartige Monomere sind beispielsweise gemäß dem nachfolgenden Schema 4 zu synthetisieren: 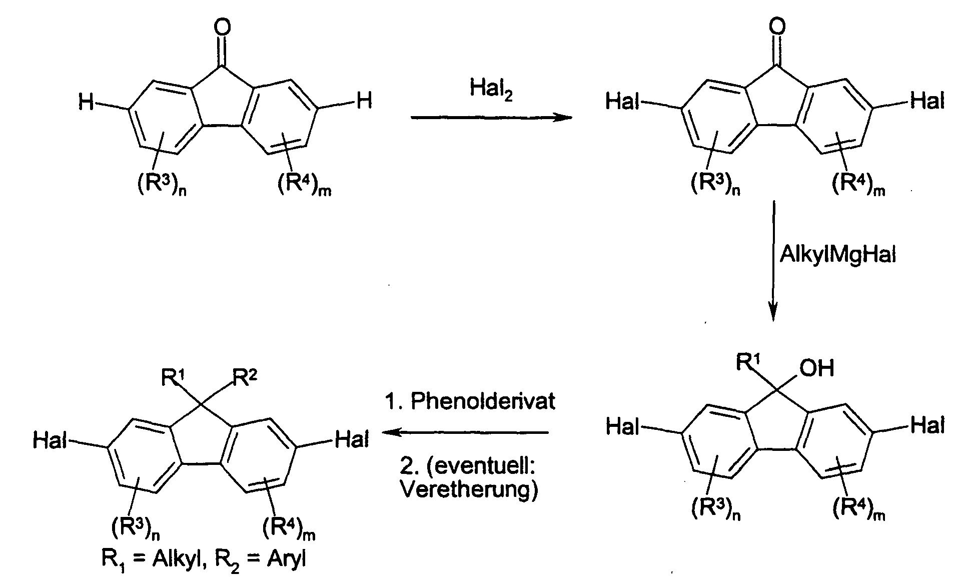 Demzufolge sind einfache Fluorenonderivate zu halogenieren. Für m, n = 0 entspricht dies die Halogenierung von Fluorenon. 2,7-Dibromfluorenon beispielsweise ist kommerziell erhältlich (z. B. Aldrich). Anschließend kann eine Alkylkette via Standard-Grignard-Reaktion eingeführt werden. Dies kann beispielsweise gemäß den Beschreibungen im Organikum (15. Auflage, 1977, Seite 623) geschehen.
Anschließend kann ein Phenolderivat sauer katalysiert addiert werden. Dies ist möglich analog den Beschreibungen in WO 92/07812. Die dadurch erhaltene Verbindung kann gegebenenfalls noch verethert werden. Dies kann z. B. der Williamson'schen Methode folgend geschehen (vgl. Organikum, 15. Auflage, 1977, Seite 253).

Wie schon bei den 9,9-Dialkylfluorenmonomeren ist hier eine weitere Umsetzung zu den entsprechenden Fluorenbisboronsäurederivaten, Fluorenbisstannaten bzw. Monohalogenfluorenmonoboronsäurederivaten bzw.
Monohalogenfluorenmonostannaten möglich.

### C) 9-9-Diarylfluorenmonomere:

Derartige Monomere sind beispielsweise gemäß den beiden im nachfolgenden Schema 5 beschriebenen Wegen zu synthetisieren: 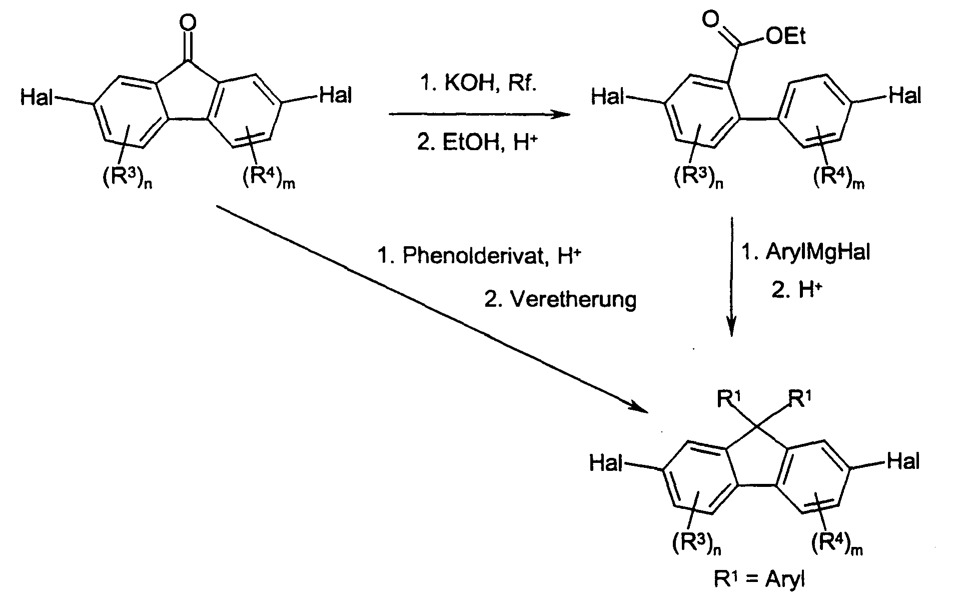 Ausgehend von bishalogenierten Fluorenonderivaten (vgl. Beschreibung zu Schema 4) können zunächst als Zwischenprodukt 4,4'-Dihalogenbiphenyl-2-carbonsäureesterderivate durch basische Ringöffnung mit anschließender Veresterung erhalten werden. Diese Verbindungen können dann durch Umsetzung mit Aryl-Grignard-Reagenzien und anschließende saure Cyclisierung zu den gewünschten Fluorenmonomeren umgesetzt werden.
Alternativ kann auch gleich das bishalogenierten Fluorenonderivat mit Phenolderivaten gemäß WO 92/07812 umgesetzt und anschließend durch Veretherung zu gewünschten Fluorenmonomeren umgesetzt werden.
Wie schon bei den 9,9-Dialkylfluorenmonomeren ist hier eine weitere Umsetzung zu den entsprechenden Fluorenbisboronsäurederivaten, Fluorenbisstannaten bzw. Monohalogenfluorenmonoboronsäurederivaten bzw.
Monohalogenfluorenmonostannaten möglich.

### D) Monomere die der Struktureinheit der Formel (II) zugrundeliegen:

Wie oben bereits beschrieben erfüllen eine Vielzahl von Struktureinheiten die Anforderungen, die an entsprechende Monomere gerichtet werden. Beispielhaft wird hier auf die Synthese von einigen dieser Verbindungsklassen eingegangen. Für Fachleute stellt jedoch auch die Synthese weiterer Verbindungen diesen Typs keine ungewöhnliche Aufgabe dar, da viele dieser Verbindungen (bzw. einfache Derivate davon) bereits ausführlich in der organischen Syntheseliteratur beschrieben sind.
(a) Synthese von Monomeren, die zu 1,2-Phenylenstrukturelementen führen:
   Hier ist zunächst darauf zu verweisen, daß bereits das kommerziell verfügbare o-Dibrombenzol als Comonomer verwendet werden kann, soweit der Anteil nicht zu hoch angesetzt wird, da sonst mit Löslichkeitsproblemen im Polymer zu rechnen ist. Einfache Derivate davon sind entweder ebenfalls (zumindest als Feinstchemikalien) kommerziell erhältlich, oder leicht darzustellen.
   Für gute Löslichkeit geeignet sind vorallem auch Derivate, die über längere Alkyl- oder Alkyloxyketten verfügen. Im nachfolgenden Schema 6 ist beispielhaft die Synthese einer solchen Verbindungsklasse erläutert. 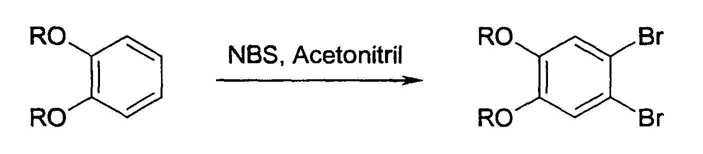 Brenzkatechindiether sind durch einfache Veretherung in beliebiger Substitution darstellbar. Bromiert man diese mit N-Bromsuccinimid in Acetonitril (bei entsprechender Stöchiometrie), so sind die entsprechenden 4,5-Dibrombrenzkatechindiether sehr gut zugänglich.
   Wie schon bei den 9,9-Dialkylfluorenmonomeren ist hier eine weitere Umsetzung zu den entsprechenden Brenzkatechinbisboronsäurederivaten, Brenzkatechinbisstannaten bzw.
   Monohalogenbrenzkatechinmonoboronsäurederivaten bzw.
   Monohalogenbrenzkatechinmonostannaten möglich.
(b) Synthese von Monomeren, die zu 4,4"-o-Terphenylenstrukturelementen führen:
   Hier bietet sich der einfache Zugang zu 1,2-unsymmetrischen Hexaphenylbenzolderivaten an, um diese Verbindungen gut zu erhalten. Dieser Syntheseweg ist im nachfolgenden Schema 7 aufgezeigt. 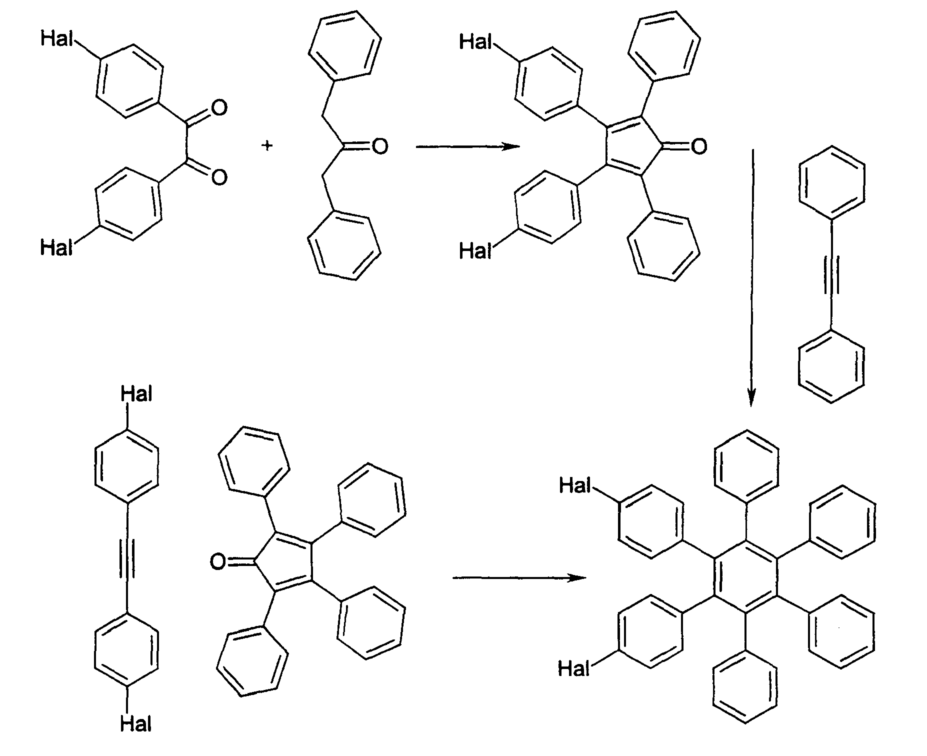 Dabei ist entweder eine Cycloaddition (mit gleichzeitiger CO-Eliminierung) ausgehend von kommerziellem Tetracyclon mit entsprechenden 4,4'-Dihalogentolanen möglich oder die inverse Route, daß zunächst das entsprechende Dihalogentetracyclon ausgehend von kommerziellen Vorstufen (4,4'-Dihalogenbibenzyl, Diphenylaceton) dargestellt wird und dieses dann mit kommerziellem Tolan cyclisiert wird.
   Wie schon bei den 9,9-Dialkylfluorenmonomeren ist hier eine weitere Umsetzung zu den entsprechenden Bisboronsäurederivaten, Bisstannaten bzw.
   Monohalogenmonoboronsäurederivaten bzw. Monohalogenmonostannaten möglich.

Damit ist nun gezeigt, daß Monomere, die bevorzugt durch die oben beschriebenen Polymerisationsmethoden zu erfindungsgemäßen Polymeren umgesetzt werden können, leicht zugänglich sind.

Die so erhaltenen Polymere eignen sich ganz besonders bevorzugt als organischer Halbleiter und insbesondere als Elektrolumineszenzmaterialien.

Als Elektrolumineszenzmaterialien im Sinne der Erfindung gelten Materialien, die als aktive Schicht in einer Elektrolumineszenzvorrichtung Verwendung finden können. Aktive Schicht bedeutet, daß die Schicht befähigt ist, bei Anlegen eines elektrischen Feldes Licht abzustrahlen (lichtemittierende Schicht) und/oder daß sie die Injektion und/oder den Transport der positiven und/oder negativen Ladungen verbessert (Ladungsinjektions- oder Ladungstransportschicht).

Gegenstand der Erfindung ist daher auch die Verwendung eines erfindungsgemäßen Polymers als Elektrolumineszenzmaterial sowie als organischer Halbleiter.

Um als Elektrolumineszenzmaterialien Verwendung zu finden, werden die erfindungsgemäßen Polymere im allgemeinen nach bekannten, dem Fachmann geläufigen Methoden, wie Eintauchen (Dipping) oder Lackschleudern (Spincoating), in Form eines Films auf ein Substrat aufgebracht.

Gegenstand der Erfindung ist somit ebenfalls eine Elektrolumineszenzvorrichtung mit einer oder mehreren aktiven Schichten, wobei mindestens eine dieser aktiven Schichten ein oder mehrere erfindungsgemäße Polymere enthält. Die aktive Schicht kann beispielsweise eine lichtemittierende Schicht und/oder eine Transportschicht und/oder eine Ladungsinjektionsschicht sein.
Der allgemeine Aufbau solcher Elektrolumineszenzvorrichtungen ist beispielsweise in US-A-4,539,507 und US-A-5,151,629 beschrieben. Polymere enthaltende Elektrolumineszenzvorrichtungen sind beispielsweise in WO 90/13148 oder EP-A-0,443,861 beschrieben.

Sie enthalten üblicherweise eine elektrolumineszierende Schicht zwischen einer Kathode und einer Anode, wobei mindestens eine der Elektroden transparent ist. Zusätzlich können zwischen der elektrolumineszierenden Schicht und der Kathode eine oder mehrere Elektroneninjektions- und/oder Elektronentransportschichten eingebracht sein und/oder zwischen der elektrolumineszierenden Schicht und der Anode eine oder mehrere Lochinjektions- und/oder Lochtransportschichten eingebracht sein. Als Kathode können vorzugsweise Metalle oder metallische Legierungen, z.B. Ca, Sr, Ba, Mg, Al, In, Mg/Ag dienen. Als Anode können Metalle, z.B. Au, oder andere metallisch leitende Stoffe, wie Oxide, z.B. ITO (Indiumoxid/Zinnoxid) auf einem transparentem Substrat, z.B. aus Glas oder einem transparenten Polymer, dienen.

Im Betrieb wird die Kathode auf negatives Potential gegenüber der Anode gesetzt. Dabei werden Elektronen von der Kathode in die Elektroneninjektionsschicht/Elektronentransportschicht bzw. direkt in die lichtemittierende Schicht injiziert. Gleichzeitig werden Löcher von der Anode in die Lochinjektionsschicht/Lochtransportschicht bzw. direkt in die lichtemittierende Schicht injiziert.

Die injizierten Ladungsträger bewegen sich unter dem Einfluß der angelegten Spannung durch die aktiven Schichten aufeinander zu. Dies führt an der Grenzfläche zwischen Ladungstransportschicht und lichtemittierender Schicht bzw. innerhalb der lichtemittierenden Schicht zu Elektronen/Loch-Paaren, die unter Aussendung von Licht rekombinieren. Die Farbe des emittierten Lichtes kann durch die als lichtemittierende Schicht verwendeten Materialien variiert werden.

Elektrolumineszenzvorrichtungen finden Anwendung z.B. als selbstleuchtende Anzeigeelemente, wie Kontrollampen, alphanumerische Displays, monochromen oder multichromen Matrixdisplays, Hinweisschilder, elektrooptischen Speichern und in optoelektronischen Kopplern.

In der vorliegenden Anmeldung sind verschiedene Dokumente zitiert, beispielsweise um das technische Umfeld der Erfindung zu illustrieren.

Die Erfindung wird durch die Beispiele näher erläutert.

### Synthese der Monomere:

Herstellung der Monomere vom Typ (I):
Beispiel M1: Darstellung von 2,7-Dibrom-9,9-bis-(2-ethylhexyl)fluoren
Die Darstellung erfolgte in Analogie zu Beispiel 1 in WO 97/05184. Das Produkt (84% Ausbeute) konnte durch doppelte Destillation an einem Kurzwegverdampfer [10⁻³ mbar; 1. Destillation (zum Abtrennen überschüssigen Ethylhexylbromids und restlichem DMSO) 100°C; 2. Destillation: 155°C] als hochviskoses hellgelbes Öl gewonnen werden.
¹H NMR (CDCl₃): [ppm] δ= 7.54 - 7.43 (m, 6H, H-Aryl); 1.93 (d mit Fs., 4 H, *J* = 4.0 Hz); 1.0-0.65 (m, 22H, H-Alkyl); 0.58-0.45 (m, 8H, H-Alkyl).

Beispiel M2: Darstellung von 9,9-Bis-(2-ethylhexyl)fluoren-2,7-bisboronsäure Magnesium (7,58 g, 312 mmol) wurde vorlegt, mit etwas lod versetzt; das 2,7-Dibrom-9,9-bis-(2-ethylhexyl)fluoren (68.56 g, 125 mmol) wurde in einem Tropftrichter in 300 ml trockenem THF gelöst. 30 ml dieser Lösung wurde dann zum Magnesium gegeben. Das Anspringen der Reaktion war durch starke Exothermie erkennbar. Anschließend wurde parallel die restliche Menge des Bisbromids in THF zugetropft (90 min, ca. 60°C). Nach Beendigung der Zugabe wurde für ca. 5 h refluxiert.

Parallel dazu wurde Borsäuretrimethylester (28.6 g, 0.27 mol) in THF (200 ml) vorgelegt und auf -75°C gekühlt. Bei dieser Temperatur wurde die auf RT abgekühlte Grignardlösung langsam zugetropft so daß die Temperatur nicht über -70°C stieg. Anschließend wurde langsam über Nacht unter Rühren auf Raumtemperatur erwärmt.
Die Reaktionslösung wurde auf 300 ml Eiswasser und 10 ml Schwefelsäure conc. gegeben und die organische Phase abgetrennt. Die organische Phase wurde noch 1 x mit Wasser gewaschen. Die vereinigten org. Phasen wurden mit 150 ml Essigsäureethylester extrahiert. Nach Trocknung der vereinigten org. Phasen über Na₂SO₄ wurde einrotiert. Das Rohprodukt wurde mit Hexan/Essigester/HCl (aq) (200 ml:30 ml: 5 ml) ausgerührt. Nach Trocknen wurden 45,8 g (77%) der Bisboronsäure erhalten.

Dadurch wurde die rohe Bisboronsäure (diese enthält variable Mengen verschiedener Anhydride) erhalten. Diese wurde durch dreimaliges Ausrühren mit je 300 ml Toluol weiter gereinigt.

¹H NMR (DMSO-d₆): (NMR-Signale stark verbreitert bzw. verdoppelt wg. Diastereomerie) δ = 7.87 (m, 2 H, H-1), 7.75-7.68 (m, 4 H, H-3, H-4), 1.92 (m, 4 H, C-CH₂-), 0.85-0.42 (m (br), 22 H, H-Alkyl), 0.40-0.25 (m (br), 8 H, H-Alkyl).

### Beispiel M3:

Darstellung von 9,9-Bis-(2-ethylhexyl)fluoren-2,7-bisboronsäure-bisglycolester Magnesium (6.32 g, 0.26 mol) wurde in 10 ml THF vorlegt, mit etwas lod versetzt und ein paar Tropfen 2,7-Dibrom-9,9-bis-(2-ethylhexyl)fluoren zugegeben. Das Anspringen der Reaktion war durch starke Exothermie erkennbar. Anschließend wurde parallel die restliche Menge des Bisbromids (insgesamt 68.56 g, 0.125 mol) und 300 ml THF zugetropft. Nach Beendigung der Zugabe wurde für ca. 5 h refluxiert. Es waren nur noch geringe Mengen Mg-Späne zu erkennen. Parallel dazu wurde Borsäuretrimethylester (28.6 g, 0.27 mol) in THF (200 ml) vorgelegt und auf -70°C gekühlt. Bei dieser Temperatur wurde die Grignardlösung. langsam zugetropft. Anschließend wurde langsam über Nacht unter Rühren auf Raumtemperatur erwärmt.
Die Reaktionslösung wurde auf 300 ml Eiswasser und 10 ml Schwefelsäure conc. gegeben und die organische Phase abgetrennt. Die organische Phase wurde noch einmal mit Wasser gewaschen (neutral). Nach Trocknung über Na₂SO₄ wurde einrotiert. Das Rohprodukt wurde mit Hexan (500 ml) ausgerührt. Dadurch wurde die rohe Bisboronsäure (diese enthält variable Mengen verschiedene Anhydride) erhalten.
Diese wurde direkt durch Refluxieren (12 h) in Toluol mit Ethylenglykol und
Schwefelsäure am Wasserabscheider verestert.
Ausbeute über beide Stufen: 70-85%. Reinheit (NMR) >98.5%
¹H NMR (CDCl₃): (NMR-Signale stark verbreitert bzw. verdoppelt wg. Diastereomerie) δ = 7.86 (m, 2 H, H-1), 7.79 (m, 2 H, H-3), 7.73 (d, 2 H, H-4, J = 8 Hz), 4.38 (s (br), 8 H, O-CH₂), 2.02 (m, 4 H, C-CH₂-), 0.75 (m (br), 22 H, H-Alkyl), 0.47 (m (br), 8 H, H-Alkyl).

### Herstellung der Monomere vom Typ (II):

Beispiel M4: Darstellung von 4,5-Dibrombrenzkatechinbisisobutylether Darstellung erfolgte in Analogie zu Beispiel B5 (b) in WO 98/27136. Es wurde nur mit doppeltem Überschuß Brom gearbeitet. Das Produkt wurde durch Vakuumdestillation mit Vigreux-Kolonne als Feststoff erhalten (76%).
¹H NMR (CDCl₃): 7.05 (ps-s, 2 H, H-Aryl), 3.70 (d, 4 H, O-CH₂, J = 7.5 Hz), 2.13 (pseudo-nonett, 2 H, -CH-, J = 7.5 Hz), 1.03 (t, 12 H, CH₃, J =7.5 Hz).

Beispiel M5: Darstellung von 1,2-Bis-(4-bromphenyl)-3,4,5,6-tetraphenylbenzol

### (1) 3,4-Bis-(4-bromphenyl)-2,5-diphenylcyclopentadienon:

46 g (112 mmol) 4,4'-Dibrombenzil und 23.7 g (112 mmol) 1,3-Diphenylaceton wurden in 300 ml Toluol auf Siedetemperatur erhitzt. Durch Zugabe von 250 ml Triethylenglycol wurde schließlich bei 120°C eine klare Lösung erhalten. Es wurden 11.3 ml ethanolische Benzyltrimethylammoniumhydroxid-Lösung (40%ig) zugegeben und die Heizung entfernt. Die stark exotherme Reaktion läuft sehr schnell ab. Der Reaktionsansatz wurde schwarz. Nach 10 Minuten war die Reaktion beendet. Das Toluol wurde abrotiert, der zurückbleibende Feststoff bei Raumtemperatur abgesaugt und mehrfach mit MeOH gewaschen. Nach Trocknung im Vakuum erhielt man 57 g braun-violette Kristalle (94%). Schmelzpunkt: 245°C.

### (2) 1,2-Bis-(4-bromphenyl)-3,4,5,6-tetraphenylbenzol:

81 g 3,4-Bis-(4-bromphenyl)-2,5-diphenylcyclopentadienon (150 mmol) und 32 g Tolan (180 mmol) wurden in 300 g geschmolzenem Benzophenon gelöst und vorsichtig auf 320°C erhitzt (dabei kam es ab 260°C zu starker CO-Entwicklung). Der Ansatz wurde ca. 2 h leicht refluxiert, anschließend abgekühlt und schließlich bei 80°C mit 100 g Diphenylether versetzt. Nach Erkalten wurden die erhaltenen Kristalle (Produkt mit Benzophenon und wenig Tolan) abgesaugt, mit wenig Toluol nachgewaschen und schließlich nochmals aus Toluol umkristallisiert. Nach Trocknen im Vakuum bei 60°C erhielt man 83 g (80%) sauberes Produkt.
¹H NMR (CDCl₃): 7.02, 6.68 (AA'BB', 4 + 4 H, Br-Phenyl-H), 6.83 (m (br), 20 H, Phenyl-H).

### Synthese der Polymere:

### Beispiel P1:

Copolymerisation von 2,7-Dibrom-9,9-bis(2-ethylhexyl)fluoren, 9,9-Bis(2-ethylhexyl)fluoren-2,7-bisboronsäure und 10 mol% 1,2-Bis-(4-bromphenyl)-3,4,5,6-tetraphenylbenzol durch Suzuki-Reaktion (Polymer P1).

8.78 g (16 mmol) 2,7-Dibrom-9,9-bis-(2-ethylhexyl)fluoren, 2.77 g 1,2-Bis-(4'-bromphenyl)-3,4,5,6-tetraphenylbenzol (4mmol) und 11.61 g K₂CO₃ (84 mmol) wurden in 25 ml Toluol und 25 ml Wasser gelöst und mit N₂ begast. Anschließend wurden 7 g (14.6 mmol) 9,9-Bis(2-ethylhexyl)fluoren-2,7-bisboronsäure sowie 200 mg Pd(PPh₃)₄ (0.17 mmol) unter Schutzgas zugegeben. Die gelb-bräunliche, trübe Suspension wurde unter N₂-Überlagerung bei 87°C Innentemperatur kräftig gerührt. An den folgenden drei Tagen wurde jeweils 1 g (2.1 mmol) der Diboronsäure zugegeben. Nach 3 Tagen wurde zu der sehr viskosen Mischung weitere 25 ml Toluol zugegeben. Nach insgesamt 4 Tagen wurde aufgearbeitet.

Die Reaktionslösung wurde mit 150 ml Toluol verdünnt, die Lösung wurde mit 200 ml 2% wässr. NaCN 3h ausgerührt. Dabei hellte sich die Mischung nahezu vollständig auf. Der Ansatz wurde unter Schutzgas in einen Scheidetrichter. Die org. Phase wurde mit H₂O gewaschen und durch Zusetzen von 500 ml Ethanol gefällt.

Das Polymer wurde in 635 ml THF 1 h bei 40°C gelöst und mit 640 MeOH ausgefällt, gewaschen und unter Vakuum getrocknet (8,13 g). In 405 ml THF/ 400 ml Methanol wurde ein weiteres Mal umgefällt, abgesaugt und bis zur Massenkonstanz getrocknet. Man erhielt 6.94 g (43 %) des Polymeren P1 als leicht gelben Feststoff.

¹H NMR (CDCl₃): [ppm] δ = 7.9-7.3 (m, 6 H, H-Fluoren); 7.2-6.8 (m, 28H:10, H-Phenyl); 2.2-1.9 (m, 4H, C(9)-CH₂-Fluoren); 1.1-0.4 (m, 30 H, H-Alkyl-Fluoren). Der Anteil der Hexaphenylbenzoleinheit wurde durch Integration der Signale bei 7.9-7.3 ppm (Fluoren) und 7.2-6.8 ppm (Hexaphenylbenzol) zu 10 mol% bestimmt und entspricht damit dem Anteil des eingesetzten Dibromids.
GPC: THF+0.25% Oxalsäure; Säulensatz SDV500, SDV 1000, SDV10000 (Fa. PPS), 35°C, UV Detektion 254 nm: M_{w} = 118000 g/mol, Mₙ = 61000 g/mol.
UV-Vis (Film): λₘₐₓ = 376 nm
PL (Film): λₘₐₓ = 420 nm, 445 nm

### Beispiel P2:

Copolymerisation von 2,7-Dibrom-9,9-bis-(2-ethylhexyl)fluoren, 9,9-Bis(2-ethylhexyl)fluoren-2,7-bisboronsäure und 5 mol% 1,2-Bis-(4-bromphenyl)-3,4,5,6-tetraphenylbenzol durch Suzuki-Reaktion (Polymer P2).

Analog Beispiel P1 wurden 8.78 g (16 mmol), 2,7-Dibrom-9,9-bis-(2-ethylhexyl)fluoren 1.38 g 1,2-Bis-(4'-bromphenyl)-3,4,5,6-tetraphenylbenzol (2 mmol), 11.61 g K₂CO₃ (84 mmol) und 200 mg Pd(PPh₃)₄ (0.17 mmol) mit insgesamt 10.05 g (21 mmol) 9,9-Bis(2-ethylhexyl)fluoren-2,7-bisboronsäure umgesetzt. Man erhielt 12.2 g (28.3 mmol, 78%) des Polymers P2 als gelben Feststoff.
Das ¹H NMR entspricht dem in Beispiel P1 erhaltenen; der Anteil der Hexaphenylbenzoleinheit wurde durch Integration der Signale bei 7.9-7.3 ppm (Fluoren) und 7.2-6.8 ppm (Hexaphenylbenzol) zu 5 mol% bestimmt und entspricht damit dem Anteil des eingesetzten Dibromids.
GPC: THF+0.25% Oxalsäure; Säulensatz SDV500, SDV 1000, SDV10000 (Fa. PPS), 35°C, UV Detektion 254 nm: M_{w} = 125000 g/mol, Mₙ = 71000 g/mol.

### Beispiel P3:

Copolymerisation von 2,7-Dibrom-9,9-bis(2-ethylhexyl)fluoren, 9,9-Bis(2-ethylhexyl)fluoren-2,7-bisboronsäure und 20 mol% 1,2-Bis-(4-bromphenyl)-3,4,5,6-tetraphenylbenzol durch Suzuki-Reaktion (Polymer P3).

Analog Beispiel P1 wurden 6.58 g (12 mmol) 2,7-Dibrom-9,9-bis(2-ethylhexyl)fluoren, 5.54 g 1,2-Bis-(4'-bromphenyl)-3,4,5,6-tetraphenylbenzol (8 mmol), 11.61 g K₂CO₃ (84 mmol) und 200 mg Pd(PPh₃)₄ (0.17 mmol) mit insgesamt 10.05 g (21 mmol) 9,9-Bis-(2-ethylhexyl)fluoren-2,7-bisboronsäure umgesetzt. Man erhielt 11.3 g (27.1 mmol, 67%) des Polymers P3 als gelben Feststoff.
Das ¹H NMR entspricht dem in Beispiel P1 erhaltenen; der Anteil der Hexaphenylbenzoleinheit wurde durch Integration der Signale bei 7.9-7.3 ppm (Fluoren) und 7.2-6.8 ppm (Hexaphenylbenzol) zu 20 mol% bestimmt und entspricht damit dem Anteil des eingesetzten Dibromids.
GPC: THF+0.25% Oxalsäure; Säulensatz SDV500, SDV 1000, SDV10000 (Fa. PPS), 35°C, UV Detektion 254 nm: M_{w} = 111000 g/mol, Mₙ = 65000 g/mol.

### Beispiel P4:

Copolymerisation von 2,7-Dibrom-9,9-bis(2-ethylhexyl)fluoren, 9,9-Bis(2-ethylhexyl)fluoren-2,7-bisboronsäure und 10 mol% Dibrombrenzkatechinbisisobutylether durch Suzuki-Reaktion (Polymer P4).

8.78 g (16 mmol) 2,7-Dibrom-9,9-bis(2-ethylhexyl)fluoren und 1.52 g (4mmol), Dibrombrenzkatechinbisisobutylether, 11.61 g K₂CO₃ (84 mmol) wurden in 40 ml Toluol und 25 ml Wasser sowie 0.5 ml Ethanol gelöst und mit N₂ begast. Anschließend wurden 9.09 g (19 mmol) 9,9-Bis(2-ethylhexyl)fluoren-2,7-bisboronsäure sowie der 350 mg Pd(PPh₃)₄ (0.30 mmol) unter Schutzgas zugegeben. Die gelb-bräunliche, trübe Suspension wurde unter N₂-Überlagerung bei 87°C Innentemperatur kräftig gerührt. An den folgenden zwei Tagen wurde jeweils 240 mg (0.5 mmol) der Diboronsäure zugegeben. Nach weiteren zwei Tagen wurden zu der sehr viskosen Mischung weitere 0.85 g Diboronsäure zugegeben. Nach einem weiteren Tag Erhitzen wurde aufgearbeitet wie bei Beispiel P1 beschrieben.

Ausbeute: 4.50 g (12.1 mmol, 30%)

¹H NMR (CDCl₃): [ppm] δ = 7.9-7.3 (m, 6 H, H-Fluoren); 7.1-6.8 (m, 2H / 10, H-Brenzkatecyl); 3.9-3.8 (m, 4H / 10, OCH₂-Brenzkatechin), 2.2-1.9 (m, 4H, C(9)-CH₂-Fluoren); 1.1-0.4 (m, 30 H, H-Alkyl-Fluoren/H-Alkyl Isobutyl). Der Anteil der 4,5-Diisobutyloxy-1,2-phenyleneinheit wurde durch Integration der Signale bei 7.9-7.3 ppm (Fluoren) und 3.9-3.8 ppm (Diisobutyloxy-1,2-phenyleneinheit) zu 10 mol% bestimmt und entspricht damit dem Anteil der eingesetzten Edukte.
GPC: THF+0.25% Oxalsäure; Säulensatz SDV500, SDV 1000, SDV10000 (Fa. PPS), 35°C, UV Detektion 254 nm: M_{w} = 96000 g/mol, Mₙ = 63000 g/mol.
UV-Vis (Film): λₘₐₓ = 374 nm
PL (Film): λₘₐₓ = 418 nm, 444 nm

Beispiel P5: Copolymerisation von 2,7-Dibrom-9,9-bis(2-ethylhexyl)fluoren, 9,9-Bis(2-ethylhexyl)fluoren-2,7-bisboronsäure und 35 mol% 1,2-Bis-(4-bromphenyl)-3,4,5,6-tetraphenylbenzol durch Suzuki-Reaktion (Polymer P5).

Analog Beispiel P1 wurden 3.2907 g (6 mmol) 2,7-Dibrom-9,9-bis(2-ethylhexyl)fluoren, 9.695 g 1,2-Bis-(4'-bromphenyl)-3,4,5,6-tetraphenylbenzol (14 mmol), 11.61 g K₂CO₃ (84 mmol) und 200 mg Pd(PPh₃)₄ (0.17 mmol) mit insgesamt 10.607 g (20 mmol) 9,9-Bis-(2-ethylhexyl)fluoren-2,7-bisboronsäure-bisglycolester umgesetzt. Man erhielt 10.3g (23.5 mmol, 59%) des Polymers P5 als leicht gelben Feststoff.
Das ¹H NMR entspricht dem in Beispiel P1 erhaltene; der Anteil der Hexaphenylbenzoleinheit wurde durch Integration der Signale bei 7.9-7.3 ppm (Fluoren) und 7.2-6.8 ppm (Hexaphenylbenzol) zu 35 mol% bestimmt und entspricht damit dem Anteil des eingesetzten Dibromids.
GPC: THF+0.25% Oxalsäure; Säulensatz SDV500, SDV 1000, SDV10000 (Fa. PPS), 35°C, UV Detektion 254 nm: M_{w} = 56000 g/mol, Mₙ = 32000 g/mol.

Beispiel P6: Copolymerisation von 2,7-Dibrom-9,9-bis(2-ethylhexyl)fluoren, 9,9-Bis(2-ethylhexyl)fluoren-2,7-bisboronsäure und 5 mol% 1,2-Bis-(4-bromphenyl)-3,4,5,6-tetraphenylbenzol durch Suzuki-Reaktion (Polymer P6).

Analog Beispiel P1 wurden 9.872 g (18 mmol) 2,7-Dibrom-9,9-bis(2-ethylhexyl)fluoren, 1.385 g 1,2-Bis-(4'-bromphenyl)-3,4,5,6-tetraphenylbenzol (2 mmol), 11.61 g K₂CO₃ (84 mmol) und 200 mg Pd(PPh₃)₄ (0.17 mmol) mit insgesamt 10.607 g (20 mmol) 9,9-Bis-(2-ethylhexyl)fluoren-2,7-bisboronsäure-bisglycolester umgesetzt. Man erhielt 12.1 g (30.6 mmol, 76%) des Polymers P6 als leicht gelben Feststoff.
Das ¹H NMR entspricht dem in Beispiel P1 erhaltenen; der Anteil der Hexaphenylbenzoleinheit wurde durch Integration der Signale bei 7.9-7.3 ppm (Fluoren) und 7.2-6.8 ppm (Hexaphenylbenzol) zu 5 mol% bestimmt und entspricht damit dem Anteil des eingesetzten Dibromids.
GPC: THF+0.25% Oxalsäure; Säulensatz SDV500, SDV 1000, SDV10000 (Fa. PPS), 35°C, UV Detektion 254 nm: M_{w} = 65000 g/mol, Mₙ = 41000 g/mol.

### Vergleichsbeispiele:

### Beispiel V1:

### Suzuki-Polymerisation von 2,7-Dibrom-9,9-bis-(2-ethylhexyl)fluoren, 9,9-Bis(2-ethylhexyl)fluoren-2,7-bisboronsäure (Polymer V1), Herstellung von Poly-2,7-[9,9-bis(2-ethylhexyl)fluoren]

Analog Beispiel P1 wurden 10.97 g (20 mmol) 2,7-Dibrom-9,9-bis-(2-ethylhexyl)fluoren, 11.61 g K₂CO₃ (84 mmol), 350 mg Pd(PPh₃)₄ (0.30 mmol) mit insgesamt 10.4 g (21 mmol) 9,9-Bis-(2-ethylhexyl)fluoren-2,7-bisboronsäure umgesetzt. Nach 4 Tagen Reaktionszeit erhielt man 4.72 g (12.1 mmol, 30 %) des Polymers V1 als leicht beigen Feststoff.

¹H NMR (CDCl₃): [ppm] δ = 7.9-7.3 (m, 6 H, H-Arom); 2.15 (br. s, 4H, C(9)-CH₂); 1.1-0.4 (m, 30 H, H-Alkyl).
GPC: THF+0.25% Oxalsäure; Säulensatz SDV500, SDV 1000, SDV10000 (Fa. PPS), 35°C, UV Detektion 254 nm: M_{w} = 80000 g/mol, Mₙ = 48000 g/mol.
UV-Vis (Film): λₘₐₓ = 376 nm
PL (Film): λₘₐₓ = 447 nm

### Beispiel V2:

### Suzuki-Polymerisation von 2,7-Dibrom-9,9-bis-(2-ethylhexyl)fluoren und 9,9-Bis(2-ethylhexyl)fluoren-2,7-bisboronsäurebisglykolester (Polymer V2), Herstellung von Poly-2,7-[9,9-bis(2-ethylhexyl)fluoren]

8.227g (15.00 mmol) 2,7-Dibrom-9,9-bis-(2-ethylhexyl)fluoren, 7.956g (15.00 mmol) 9,9-Bis(2-ethylhexyl)fluoren-2,7-bisboronsäurediethylenglykolester, 8.71 g (63 mmol) K₂CO₃, 25 ml Toluol und 15 ml Wasser wurden 30 min durch Durchleiten von N₂ entgast. Anschließend wurde 230 mg (0.2 mmol) Pd(PPh₃)₄ unter Schutzgas zugegeben. Die Suspension wurde unter N₂-Überlagerung bei 87°C Innentemperatur (leichter Rückfluß) kräftig gerührt. Nach 2 Tagen wurden weitere 20 ml Toluol zugegeben, nach weiteren 2 Tagen wurden weitere 0.20 g 9,9-Bis-(2-ethylhexyl)fluoren-2,7-bisboronsäurediethylenglycolester zusetzen. Nach weiteren 6 Stunden wurden 0.5 ml 4-Bromfluorbenzol (End-Capping) zugesetzt und noch 3 h zum Rückfluß erhitzt.
Die Aufarbeitung erfolgte wie unter Beispiel P1 angegeben. Man erhielt 3.85 g (9.9 mmol, 33%) des Polymers V2 als leicht beigen Feststoff.

¹H NMR (CDCl₃): [ppm] δ = 7.9-7.3 (m, 6 H, H-Arom); 2.15 (br. s, 4H, C(9)-CH₂); 1.1-0.4 (m, 30 H, H-Alkyl).
GPC: THF+0.25% Oxalsäure; Säulensatz SDV500, SDV 1000, SDV10000 (Fa. PPS), 35°C, UV Detektion 254 nm: M_{w} = 70000 g/mol, Mₙ = 34000 g/mol.
UV-Vis (Film): λₘₐₓ = 376 nm
PL (Film): λₘₐₓ = 420 nm, 444 nm

Verwendung der Polymere für Lumineszenzanwendungen:
Die Polymere P1 bis P6 und V1 und V2 sind alle sehr gut in organischen Lösemitteln, wie z. B. Toluol, THF, löslich. Aus diesen Lösungen lassen sich dünne Filme, z. B. durch Spin-Coating, erzeugen. Diese Filme zeigen dann, unter UV-Anregung (366 nm), eine bläuliche Emission.
Erhitzt man die so erzeugten Filme im Vakuum für längere Zeit (z. B. 2 h) auf über 150°C, so ist bei den Polymeren V1 und V2 eine deutliche Verschiebung der PL-Bande zu beobachten: die Polymere emittieren dann unter UV-Anregung grünlichgelbes Licht. Außerdem wird die Emission ungleichmäßig, d. h. es tritt eine marmorierte Musterung auf.
Die Emissionsfarbe der Polymere P1 bis P4 bleibt hingegen fast unverändert (Verschiebung um weniger als 20 nm).
Ein ähnliches Verhalten ist auch in EL-Vorrichtungen zu beobachten: V1 und V2 zeigen von Beginn an grüne Emission (λₘₐₓ ca. 520 nm), während die Polymeren P1 bis P4 eine blaue EL aufweisen (λₘₐₓ ca. 460 nm).

## Patentansprüche

1. Konjugierte Polymere, die neben Struktureinheiten der Formel (I), 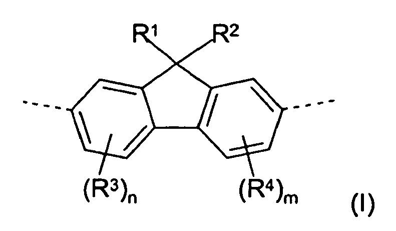 worin
R¹, R² gleich oder verschieden Wasserstoff, C₁-C₂₂-Alkyl, C₂-C₂₀-Hetereoaryl, C₅-C₂₀-Aryl, F, Cl, CN; wobei die vorstehend genannten Alkylreste verzweigt oder unverzweigt sein können oder auch Cycloalkyle darstellen, und einzelne, nicht benachbarte CH₂-Gruppen des Alkyrestes durch O, S, C=O, COO, N-R⁵ oder auch einfache Aryle ersetzt sein können, wobei die vorstehend genannten Aryle mit einem oder mehreren nicht aromatischen Substituenten R³ substituiert sein können,
R³, R⁴ gleich oder verschieden C₁-C₂₂-Alkyl, C₂-C₂₀-Hetereoaryl, C₅-C₂₀-Aryl, F, Cl, CN, SO₃R⁵, NR⁵R⁶; dabei können die Alkylreste verzweigt oder unverzweigt sein oder auch Cycloalkyle darstellen; und einzelne, nicht benachbarte CH₂-Gruppen des Alkylrestes durch O, S, C=O, COO, N-R⁵ oder auch einfache Aryle ersetzt sein können, wobei die vorstehend genannten Aryle mit einem oder mehreren nichtaromatischen Substituenten R³ substituiert sein können,
R⁵, R⁶ gleich oder verschieden H, C₁-C₂₂-Alkyl, C₂-C₂₀-Hetereoaryl, C₅-C₂₀-Aryl; dabei können die Alkylreste verzweigt oder unverzweigt sein oder auch Cycloalkyle darstellen; und einzelne, nicht benachbarte CH₂-Gruppen des Alkylrestes durch O, S, C=O, COO, N-R⁵ oder auch einfache Aryle ersetzt sein können, wobei die vorstehend genannten Aryle mit einem oder mehreren nichtaromatischen Substituenten R³ substituiert sein können, und
m, n jeweils eine ganze Zahl 0, 1, 2 oder 3 ist,
noch Struktureinheiten der Formel (II) 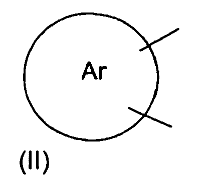 worin
Ar für Benzolderivate, die in 1,2-Stellung ins Polymer eingebaut sind, Naphthalinderivate, die in 1,2-, 2,3-, 1,7-Stellung ins Polymer eingebaut sind, Anthracenderivate, die in 1,2-, 2,3-, 1,7-, 2,9-Stellung ins Polymer eingebaut sind, Phenanthrenderivate, die in 1,2- , 1,8-, 1,9-, 2,3-, 2,5-, 2,10-, 3,4-, 3,6-, 3,9-, 4,5- oder 9,10-Stellung ins Polymer eingebaut sind, Biphenylderivate, die in 2,2'- bzw. 2,4'- Stellung ins Polymer eingebaut sind und/oder o-Terphenylderivate, die in 4,4"-Stellung ins Polymer eingebaut sind steht, bei denen ein oder mehrere Kohlenstoffatome durch Stickstoff, Sauerstoff oder Schwefel ersetzt sein können, und dessen Verknüpfungsstellen so gewählt sind, daß sich entlang der Polymerhauptkette ein Winkel ungleich 180° ergibt, ist, enthalten.

2. Polymere nach Anspruch 1, **dadurch gekennzeichnet, daß** R¹ und R² beide gleich und dabei ungleich Wasserstoff oder Chlor sind.

3. Polymere nach Anspruch 1, **dadurch gekennzeichnet, daß** R¹ und R² voneinander verschieden und auch von Wasserstoff verschieden sind.

4. Polymere nach Anspruch 1, **dadurch gekennzeichnet, daß** m, n eine ganze Zahl 0 oder 1 ist.

5. Polymere nach Anspruch 1, **dadurch gekennzeichnet, daß** der Winkel entlang der Polymerhauptkette kleiner 120° ist.

6. Polymere nach Anspruch 5, **dadurch gekennzeichnet, daß** der Winkel entlang der Polymerhauptkette kleiner 90° ist.

7. Polymere nach einem der Ansprüche 1 bis 6, **dadurch gekennzeichnet, daß** das Polymer mindestens 1 Mol-% an Struktureinheiten der Formel (II) statistisch bzw. periodisch bzw. alternierend, oder in Blöcken eingebaut enthält.

8. Polymere nach einem der Ansprüche 1 bis 7, **dadurch gekennzeichnet, daß** das Polymer 10 bis 10000 Wiederholeinheiten der Formel (I) und (II) enthält.

9. Verwendung des Polymeren gemäß einem der Ansprüche 1 bis 8 als organischer Halbleiter und/oder als Elektrolumineszenzmaterial.

10. Elektrolumineszenzvorrichtung enthaltend ein Polymeres gemäß einem der Ansprüche 1 bis 8.

## Claims

1. Conjugated polymers which, besides structural units of the formula (I) 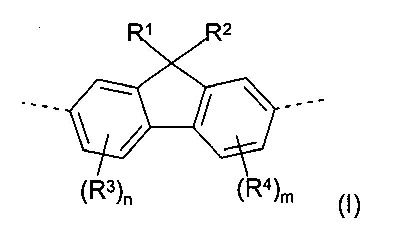 in which
R¹, R², identically or differently, represent hydrogen, C₁-C₂₂-alkyl, C₂-C₂₀-heteroaryl, C₅-C₂₀-aryl, F, Cl, CN; where the above-mentioned alkyl radicals may be branched or unbranched or also represent cycloalkyl radicals, and individual, non-adjacent CH₂ groups of the alkyl radical may be replaced by O, S, C=O, COO, N-R⁵ or simple aryl radicals, where the above-mentioned aryl radicals may be substituted by one or more non-aromatic substituents R³,
R³, R⁴, identically or differently, represent C₁-C₂₂-alkyl, C₂-C₂₀-heteroaryl, C₅-C₂₀-aryl, F, Cl, CN, SO₃R⁵, NR⁵R⁶; the alkyl radicals here may be branched or unbranched or also represent cycloalkyl radicals; and individual, non-adjacent CH₂ groups of the alkyl radical may be replaced by O, S, C=O, COO, N-R⁵ or simple aryl radicals, where the above-mentioned aryl radicals may be substituted by one or more non-aromatic substituents R³,
R⁵, R⁶, identically or differently, represent H, C₁-C₂₂-alkyl, C₂-C₂₀-heteroaryl, C₅-C₂₀-aryl; the alkyl radicals here may be branched or unbranched or also represent cycloalkyl radicals; and individual, non-adjacent CH₂ groups of the alkyl radical may be replaced by O, S, C=O, COO, N-R⁵ or simple aryl radicals, where the above-mentioned aryl radicals may be substituted by one or more non-aromatic substituents R³, and
m, n are each an integer 0, 1, 2 or 3,
also contain structural units of the formula (II) 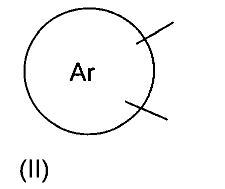 in which
Ar stands for benzene derivatives which are incorporated into the polymer in the 1,2-position, naphthalene derivatives which are incorporated into the polymer in the 1,2-, 2,3-, 1,7-position, anthracene derivatives which are incorporated into the polymer in the 1,2-, 2,3-, 1,7-, 2,9-position, phenanthrene derivatives which are incorporated into the polymer in the 1,2-, 1,8-, 1,9-, 2,3-, 2,5-, 2,10-, 3,4-, 3,6-, 3,9-, 4,5- or 9,10-position, biphenyl derivatives which are incorporated into the polymer in the 2,2'- or 2,4'-position and/or o-terphenyl derivatives which are incorporated into the polymer in the 4,4"-position, in which one or more carbon atoms may be replaced by nitrogen, oxygen or sulfur, and whose linking points are selected in such a way that an angle not equal to 180° arises along the main polymer chain.

2. Polymers according to Claim 1, **characterised in that** R¹ and R² are both identical and are not hydrogen or chlorine.

3. Polymers according to Claim 1, **characterised in that** R¹ and R² are different from one another and are also not hydrogen.

4. Polymers according to Claim 1, **characterised in that** m, n are an integer 0 or 1.

5. Polymers according to Claim 1, **characterised in that** the angle along the main polymer chain is less than 120°.

6. Polymers according to Claim 5, **characterised in that** the angle along the main polymer chain is less than 90°.

7. Polymers according to one of Claims 1 to 6, **characterised in that** the polymer contains at least 1 mol% of structural units of the formula (II) incorporated randomly or periodically or alternately, or in blocks.

8. Polymers according to one of Claims 1 to 7, **characterised in that** the polymer contains 10 to 10,000 recurring units of the formulae (I) and (II).

9. Use of the polymer according to one of Claims 1 to 8 as organic semiconductor and/or as electroluminescent material.

10. Electroluminescent device containing a polymer according to one of Claims 1 to 8.

## Revendications

1. Polymères conjugués qui, en plus d'unités structurelles de la formule (I) 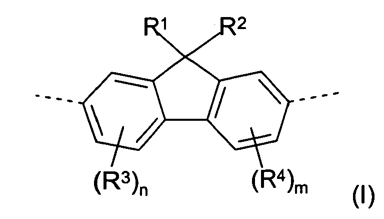 dans laquelle
R¹, R², de manière identique ou différente, représentent hydrogène, C₁-C₂₂-alkyle, C₂-C₂₀-hétéroaryle, C₅-C₂₀-aryle, F, CI, CN; où les radicaux alkyle mentionnés ci avant peuvent être ramifiés ou non ramifiés, ou représentent également des radicaux cycloalkyle; et des groupes CH₂ non adjacents individuels du radical alkyle peuvent être remplacés par O, S, C=O, COO, N-R⁵ ou des radicaux aryle simples, où les radicaux aryle mentionnés ci avant peuvent être substitués par un ou plusieurs substituants non aromatiques R³,
R³, R⁴, de manière identique ou différente, représentent C₁-C₂₂-alkyle, C₂-C₂₀-hétéroaryle, C₅-C₂₀-aryle, F, CI, CN, SO₃R⁵, NR⁵R⁶; les radicaux alkyle peuvent ici être ramifiés ou non ramifiés, ou représentent également des radicaux cycloalkyle; et des groupes CH₂ non adjacents individuels du radical alkyle peuvent être remplacés par O, S, C=O, COO, N-R⁵ ou des radicaux aryle simples, où les radicaux aryle mentionnés ci avant peuvent être substitués par un ou plusieurs substituants non aromatiques R³,
R⁵, R⁶, de manière identique ou différente, représentent H, C₁-C₂₂-alkyle, C₂-C₂₀-hétéroaryle, C₅-C₂₀-aryle; les radicaux alkyle peuvent ici être ramifiés ou non ramifiés, ou représentent également des radicaux cycloalkyle; et des groupes CH₂ non adjacents individuels du radical alkyle peuvent être remplacés par O, S, C=O, COO, N-R⁵ ou des radicaux aryle simples, où les radicaux aryle mentionnés ci avant peuvent être substitués par un ou plusieurs substituants non aromatiques R³, et
m, n sont chacun un entier 0, 1, 2 ou 3,
contiennent également des unités structurelles de la formule (II) 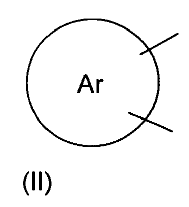 dans laquelle
Ar représente des dérivés de benzène qui sont incorporés dans le polymère à la position 1,2, des dérivés de naphtalène qui sont incorporés dans le polymère à la position 1,2, 2,3, 1,7, des dérivés d'anthracène qui sont incorporés dans le polymère à la position 1,2, 2,3, 1,7, 2,9, des dérivés de phénanthrène qui sont incorporés dans le polymère à la position 1,2, 1,8, 1,9, 2,3, 2,5, 2,10, 3,4, 3,6, 3,9, 4,5 ou 9,10, des dérivés de biphényle qui sont incorporés dans le polymère à la position 2,2' ou 2,4' et/ou des dérivés de o-terphényle qui sont incorporés dans le polymère à la position 4,4", où un ou plusieurs atomes de carbone peuvent être remplacés par azote, oxygène ou soufre, et dont des points de liaison sont choisis de telle sorte qu'un angle non égal à 180° soit formé le long de la chaîne polymérique principale.

2. Polymères selon la revendication 1, **caractérisés en ce que** R¹ et R² sont tous deux identiques et ne sont ni hydrogène, ni chlore.

3. Polymères selon la revendication 1, **caractérisés en ce que** R¹ et R² sont différents l'un de l'autre et ne sont pas non plus hydrogène.

4. Polymères selon la revendication 1, **caractérisés en ce que** m, n sont un entier 0 ou 1.

5. Polymères selon la revendication 1, **caractérisés en ce que** l'angle le long de la chaîne polymérique principale est inférieur à 120°.

6. Polymères selon la revendication 5, **caractérisés en ce que** l'angle le long de la chaîne polymérique principale est inférieur à 90°.

7. Polymères selon l'une des revendications 1 à 6, **caractérisés en ce que** le polymère contient au moins 1 mol% d'unités structurelles de la formule (II) incorporées de façon aléatoire ou périodique ou en alternance, ou selon des blocs.

8. Polymères selon l'une des revendications 1 à 7, **caractérisés en ce que** le polymère contient de 10 à 10 000 unités récurrentes des formules (I) et (II).

9. Utilisation du polymère selon l'une des revendications 1 à 8 en tant que semiconducteur organique et/ou en tant que matériau électroluminescent.

10. Dispositif électroluminescent contenant un polymère selon l'une des revendications 1 à 8.
